# EUROPEAN PATENT APPLICATION

(11) **EP 4 814 284 A1**
(43) Date of publication of application: **30.09.2026**
(21) Application number: 26167680.3
(22) Date of filing: 25.03.2026
(51) Int. Cl.: F02C 9/28, F02C 9/46

(54) **CONTROL DEVICE, MOVING OBJECT, CONTROL METHOD, PROGRAM, AND STORAGE MEDIUM**

(30) Priority: 27.03.2025 JP 2025053652
(71) Applicant: Honda Motor Co., Ltd., Toyko 105-8404 (JP)
(72) Inventor: SATO, Daisuke, Saitama, 351-0193 (JP)
(74) Representative: Weickmann & Weickmann PartmbB

(57) **Abstract**

In a control device (68), an abnormality determination unit (94) determines that an abnormality has occurred in an output shaft (32) in a case where an output comparison unit (86) determines that a generator output is equal to or greater than an output threshold, a rotational speed comparison unit (88) determines that a rotational speed of a generator (22) is less than a rotational speed threshold, and a pressure comparison unit (90) determines that a value corresponding to a compressor outlet pressure is equal to or greater than a pressure threshold.

## Description

### BACKGROUND OF THE INVENTION

### FIELD OF THE INVENTION

The present disclosure relates to a control device, a moving object, a control method, a program, and a storage medium.

### DESCRIPTION OF THE RELATED ART

JP 2001-107750 A discloses a control device for a gas turbine engine.

Accompanying the electrification of moving objects, there has been developed a power supply system including a generator driven via an output shaft of a gas turbine engine.

### SUMMARY OF THE INVENTION

It is desirable to suitably use a power supply system including a gas turbine engine and a generator.

The present disclosure has the object of solving the above-described problem.

A first aspect of the present disclosure is characterized by a control device provided in a power supply system that includes a generator driven via an output shaft of a gas turbine engine, the control device comprising: an output comparison unit configured to compare a generator output that is an output of the generator, with an output threshold determined in advance; a rotational speed comparison unit configured to compare a rotational speed of the generator with a rotational speed threshold determined in advance; a pressure comparison unit configured to compare a value corresponding to a compressor outlet pressure that is a pressure at an outlet of a compressor provided in the gas turbine engine, with a pressure threshold determined in advance; and an abnormality determination unit configured to determine whether or not an abnormality has occurred in the output shaft, wherein the abnormality determination unit determines that the abnormality has occurred in the output shaft in a case where the output comparison unit determines that the generator output is equal to or greater than the output threshold, the rotational speed comparison unit determines that the rotational speed of the generator is less than the rotational speed threshold, and the pressure comparison unit determines that the value corresponding to the compressor outlet pressure is equal to or greater than the pressure threshold.

A second aspect of the present disclosure is characterized by a moving object comprising a power supply system including the control device according to the first aspect.

A third aspect of the present disclosure is characterized by a control method for a power supply system including a generator driven via an output shaft of a gas turbine engine, the control method comprising: an output comparison step of comparing a generator output that is an output of the generator, with an output threshold determined in advance; a rotational speed comparison step of comparing a rotational speed of the generator with a rotational speed threshold determined in advance; a pressure comparison step of comparing a value corresponding to a compressor outlet pressure that is a pressure at an outlet of a compressor provided in the gas turbine engine, with a pressure threshold determined in advance; and an abnormality determination step of determining whether or not an abnormality has occurred in the output shaft, wherein, in the abnormality determination step, it is determined that the abnormality has occurred in the output shaft in a case where it is determined that the generator output is equal to or greater than the output threshold in the output comparison step, it is determined that the rotational speed of the generator is less than the rotational speed threshold in the rotational speed comparison step, and it is determined that the value corresponding to the compressor outlet pressure is equal to or greater than the pressure threshold in the pressure comparison step.

A fourth aspect of the present disclosure is characterized by a program for causing a computer to execute the control method according to the third aspect.

According to the present disclosure, it is possible to suitably use a power supply system including a gas turbine engine and a generator.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic diagram of a moving object;
FIG. 2 is a schematic diagram of a power supply system;
FIG. 3 is a circuit diagram of a PCU;
FIG. 4 is a control block diagram of a control device; and
FIG. 5 is a flowchart of a breakage determination process.

### DETAILED DESCRIPTION OF THE INVENTION

In a power supply system including a generator driven via an output shaft of a gas turbine engine, various problems occur when a breakage occurs in the output shaft of the gas turbine engine during power generation of the generator. Therefore, it is desirable to find out that a breakage has occurred in the output shaft of the gas turbine engine. The present disclosure enables detection of occurrence of a breakage in the output shaft.

### [1. Moving Object 100]

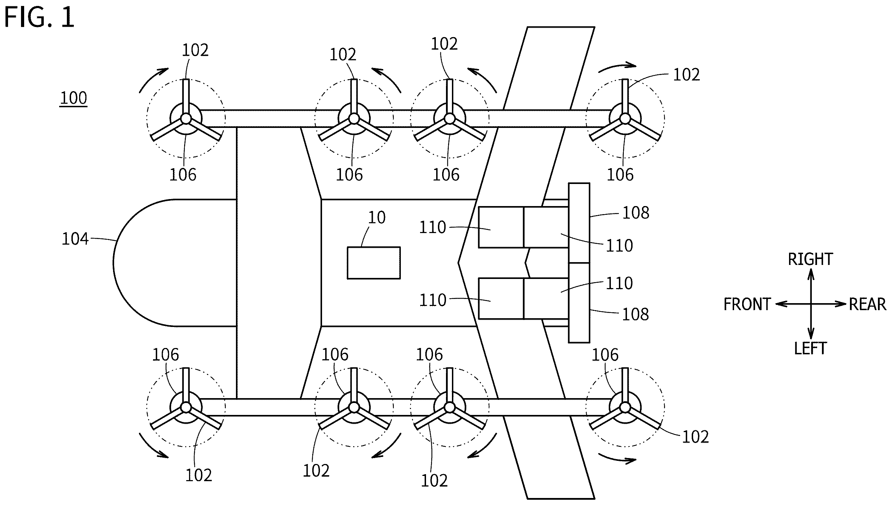

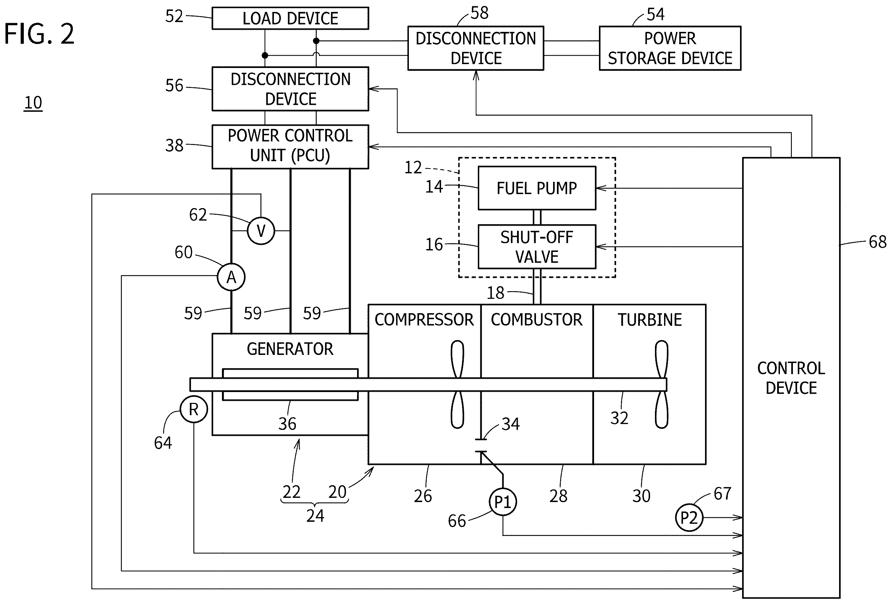

FIG. 1 is a schematic diagram of a moving object 100. The moving object 100 of an embodiment of the present disclosure is an electric vertical take-off and landing aircraft (eVTOL aircraft). The moving object 100 includes eight VTOL rotors 102. The VTOL rotors 102 generate upward thrust for a fuselage 104. The moving object 100 includes eight electric motors 106. One electric motor 106 drives one VTOL rotor 102. The moving object 100 includes two cruise rotors 108. The cruise rotors 108 generate forward thrust for the fuselage 104. The moving object 100 includes four electric motors 110. Two electric motors 110 drive one cruise rotor 108. The moving object 100 includes a plurality of power supply systems 10 (FIG. 2). The moving object 100 is not limited to being an aircraft, but may be a ship, an automobile, a train, or the like.

### [2. Configuration of Power Supply System 10]

FIG. 2 is a schematic diagram of the power supply system 10. In the power supply system 10, electric power is supplied to each electric motor 106 and each electric motor 110 shown in FIG. 1.

The power supply system 10 includes a fuel supply unit 12. The fuel supply unit 12 includes a fuel pump 14 and a shut-off valve 16. The fuel pump 14 is connected, via a fuel supply passage 18, to a combustor 28 provided in a gas turbine engine 20. The shut-off valve 16 is disposed in the fuel supply passage 18.

The fuel pump 14 is provided in a fuel tank (not shown). The fuel pump 14 is, for example, an electric pump. The fuel pump 14 can rotate in a forward direction and a reverse direction. By rotating in the forward direction, the fuel pump 14 sucks fuel in the fuel tank, and pumps the sucked fuel to the fuel supply passage 18. By rotating in the reverse direction, the fuel pump 14 recovers the fuel remaining in the fuel supply passage 18 and returns the recovered fuel into the fuel tank.

The shut-off valve 16 can open and close the fuel supply passage 18. By closing the fuel supply passage 18, the shut-off valve 16 shuts off the flow of the fuel in the fuel supply passage 18. The shut-off valve 16 can shut off the fuel supplied from the fuel pump 14 to the combustor 28 provided in the gas turbine engine 20 via the fuel supply passage 18.

The power supply system 10 includes the gas turbine engine 20 and a generator 22. The gas turbine engine 20 and the generator 22 constitute a power generation unit 24. The gas turbine engine 20 and the generator 22 are integrally formed. The gas turbine engine 20 includes a compressor 26, the combustor 28, and a turbine 30. The compressor 26 compresses outside air sucked therein and discharges the compressed air from an outlet 34. The combustor 28 burns a mixed gas of the air discharged from the outlet 34 of the compressor 26 and the fuel supplied from the fuel supply passage 18. The turbine 30 is rotated by a high-temperature gas generated by combustion of the mixed gas. An output shaft 32 of the gas turbine engine 20 is connected to a rotor 36 of the generator 22 and passes through the generator 22. The output shaft 32 may be formed by a single member or may be formed by connecting a plurality of members. The generator 22 is a motor generator that can also function as an electric motor. The generator 22 outputs, for example, three-phase AC power.

The power supply system 10 includes a power control unit 38. The power control unit 38 can function as an AC-DC converter and an inverter. The power control unit 38 is also referred to herein as a PCU 38. The terminals of the PCU 38 on the primary side are connected to the output terminals of the generator 22. The terminals of the PCU 38 on the secondary side are connected to the terminals of a load device 52, the terminals of a power storage device 54, and the like. The PCU 38 can convert three-phase AC power input from the primary side into DC power and output the DC power to the secondary side. Further, the PCU 38 can convert DC power input from the secondary side into three-phase AC power and output the three-phase AC power to the primary side.

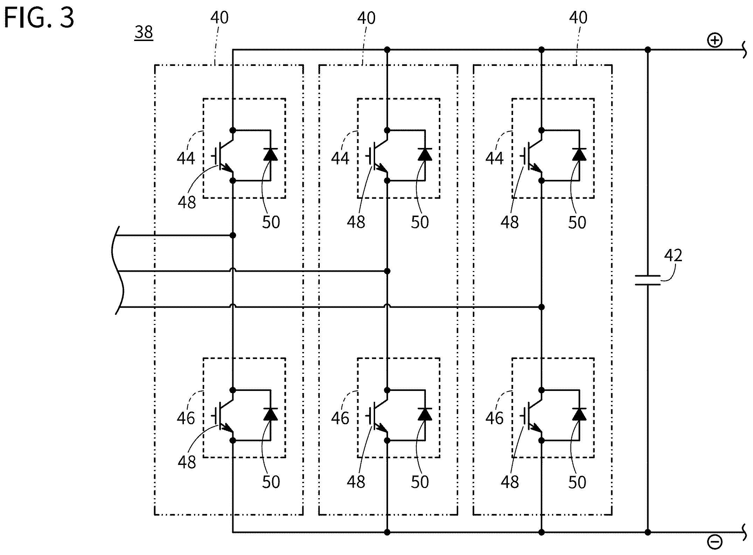

FIG. 3 is a circuit diagram of the PCU 38. The PCU 38 includes three power element units 40 corresponding to respective phases of the three-phase voltage output from the generator 22, and a smoothing capacitor 42. The three power element units 40 have the same configuration.

The power element units 40 each include an upper arm 44 and a lower arm 46. Each of the upper arm 44 and the lower arm 46 includes a switching element 48 and a diode 50. In the power element unit 40, the switching element 48 of the upper arm 44 and the switching element 48 of the lower arm 46 are connected in series to each other. A first end portion of the switching element 48 of the upper arm 44 is connected to a positive wire of the PCU 38. A second end portion of the switching element 48 of the upper arm 44 and a first end portion of the switching element 48 of the lower arm 46 are connected to one of three phase terminals of the generator 22. A second end portion of the switching element 48 of the lower arm 46 is connected to a negative wire of the PCU 38. The anode of the diode 50 is connected to the second end portion of the switching element 48. The cathode of the diode 50 is connected to the first end portion of the switching element 48.

As shown in FIG. 2, the power supply system 10 includes the load device 52. The load device 52 includes one or more electric motors 106 and one or more electric motors 110 shown in FIG. 1. An inverter is connected to each of the electric motors 106 and each of the electric motors 110. The inverter converts the input DC power into three-phase AC power. The electric motors 106 and the electric motors 110 are driven by the three-phase AC power. The load device 52 may include a DC-DC power conversion device and a low-voltage drive device (both of which are not shown).

The power supply system 10 includes the power storage device 54. The power storage device 54 is connected in parallel with the PCU 38 to a circuit that supplies electric power from the PCU 38 to the load device 52. The power storage device 54 includes a storage battery (for example, a lithium ion battery).

The power supply system 10 includes a disconnection device 56 and a disconnection device 58. The disconnection device 56 is disposed in the circuit that supplies electric power from the PCU 38 to the load device 52. The disconnection device 56 can disconnect the PCU 38 from the load device 52 and the power storage device 54. The disconnection device 58 is disposed in a circuit that supplies electric power from the power storage device 54 to the load device 52. The disconnection device 58 can disconnect the power storage device 54 from the load device 52 and the PCU 38. In the present embodiment, the disconnection device 56 and the disconnection device 58 each include a contactor, but may include another switching device.

The power supply system 10 includes a current sensor 60, a voltage sensor 62, a rotational speed sensor 64, a pressure sensor 66, and an atmospheric pressure sensor 67. The current sensor 60 detects a current flowing through any one of three wires 59 connecting the generator 22 and the PCU 38. The voltage sensor 62 detects a potential difference between any two of the three wires 59. The rotational speed sensor 64 is attached to an end portion of the generator 22. The rotational speed sensor 64 detects the rotational speed of the output shaft 32 of the gas turbine engine 20 that protrudes from the generator 22. The pressure sensor 66 detects the pressure at the outlet 34 of the compressor 26 provided in the gas turbine engine 20. The atmospheric pressure sensor 67 detects the atmospheric pressure.

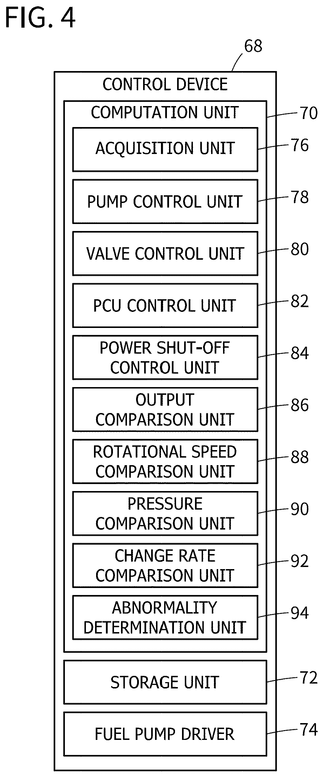

The power supply system 10 includes a control device 68. FIG. 4 is a control block diagram of the control device 68. The control device 68 is constituted by, for example, an electronic control unit (ECU).

The control device 68 includes a computation unit 70, a storage unit 72, and a fuel pump driver 74. The computation unit 70 is a processor such as a central processing unit (CPU) or a graphics processing unit (GPU). The computation unit 70 includes an acquisition unit 76, a pump control unit 78, a valve control unit (a fuel shut-off control unit) 80, a PCU control unit 82, a power shut-off control unit 84, an output comparison unit 86, a rotational speed comparison unit 88, a pressure comparison unit 90, a change rate comparison unit 92, and an abnormality determination unit 94. The acquisition unit 76, the pump control unit 78, the valve control unit 80, the PCU control unit 82, the power shut-off control unit 84, the output comparison unit 86, the rotational speed comparison unit 88, the pressure comparison unit 90, the change rate comparison unit 92, and the abnormality determination unit 94 are realized by the computation unit 70 executing a program stored in the storage unit 72. At least part of the acquisition unit 76, the pump control unit 78, the valve control unit 80, the PCU control unit 82, the power shut-off control unit 84, the output comparison unit 86, the rotational speed comparison unit 88, the pressure comparison unit 90, the change rate comparison unit 92, and the abnormality determination unit 94 may be realized by an integrated circuit such as an application specific integrated circuit (ASIC) or a field-programmable gate array (FPGA). At least part of the acquisition unit 76, the pump control unit 78, the valve control unit 80, the PCU control unit 82, the power shut-off control unit 84, the output comparison unit 86, the rotational speed comparison unit 88, the pressure comparison unit 90, the change rate comparison unit 92, and the abnormality determination unit 94 may be realized by an electronic circuit including a discrete device.

The storage unit 72 is a non-transitory computer-readable tangible storage medium. The storage unit 72 is constituted by a volatile memory (not shown) and a non-volatile memory (not shown). The volatile memory is, for example, a random access memory (RAM) or the like. The non-volatile memory is, for example, a read only memory (ROM), a flash memory, or the like. Data and the like are stored in, for example, the volatile memory. A program, a table, a map, and the like are stored in, for example, the non-volatile memory. At least part of the storage unit 72 may be included in the processor, the integrated circuit, or the like described above. Note that a computer program (computer software) according to the present embodiment may also be referred to as a computer program product. The computer program product is not limited to a computer program recorded in a recording medium, but includes a computer program that is transmitted, distributed, or downloaded via the Internet or the like.

The acquisition unit 76 acquires various types of information from the outside of the computation unit 70. For example, the acquisition unit 76 acquires information indicating a current value from the current sensor 60. This information is referred to as current information. The acquisition unit 76 acquires information indicating a voltage value from the voltage sensor 62. This information is referred to as voltage information. The acquisition unit 76 acquires information indicating a rotational speed from the rotational speed sensor 64. This information is referred to as rotational speed information. The acquisition unit 76 acquires information indicating a pressure value from the pressure sensor 66. This information is referred to as pressure information. The acquisition unit 76 acquires information indicating the atmospheric pressure from the atmospheric pressure sensor 67. This information is referred to as atmospheric pressure information.

The pump control unit 78 controls the operation of the fuel pump 14. The pump control unit 78 outputs a control signal to the fuel pump driver 74. The fuel pump driver 74 supplies electric power to the fuel pump 14 in response to the control signal.

The valve control unit 80 outputs a control signal to the shut-off valve 16 to control the opening and closing of the shut-off valve 16. The opening control of the shut-off valve 16 performed by the valve control unit 80 is control for allowing communication between the fuel supply passage 18 connected to the fuel pump 14 and the fuel supply passage 18 connected to the gas turbine engine 20. The closing control of the shut-off valve 16 performed by the valve control unit 80 is control for shutting off the supply of fuel to the gas turbine engine 20.

The PCU control unit 82 outputs a control signal to each switching element 48 provided in the PCU 38 to perform switching control of each switching element 48. The torque of the generator 22 can be changed by the switching control performed by the PCU control unit 82, and as a result, the electric power output from the generator 22 can be changed.

The power shut-off control unit 84 performs shut-off control of the disconnection device 56 and the disconnection device 58. In the case where the disconnection device 56 includes a contactor, the power shut-off control unit 84 performs energization control on the disconnection device 56. As a result, the disconnection device 56 is switched from the connected state to the power shut-off state. Similarly, in the case where the disconnection device 58 includes a contactor, the power shut-off control unit 84 performs energization control on the disconnection device 58. As a result, the disconnection device 58 is switched from the connected state to the power shut-off state.

The output comparison unit 86 compares a generator output, which is the output of the generator 22, with an output threshold determined in advance, and determines whether or not the generator output is equal to or greater than the output threshold. The output threshold is a boundary value between the output in the case where the generator 22 is operating in a high load condition and the output in the case where the generator 22 is operating in a low load condition. The output threshold can be set arbitrarily. The output threshold is stored in advance in the storage unit 72.

The rotational speed comparison unit 88 compares the rotational speed of the generator 22 with a rotational speed threshold determined in advance, and determines whether or not the rotational speed of the generator 22 is less than the rotational speed threshold. The rotational speed threshold is a boundary value between the rotational speed in the case where a breakage has occurred in the output shaft 32 and the rotational speed in the case where a breakage has not occurred in the output shaft 32. The rotational speed threshold can be set arbitrarily. The rotational speed threshold is stored in advance in the storage unit 72.

The pressure comparison unit 90 compares a value corresponding to a compressor outlet pressure with a threshold determined in advance, and determines whether or not the value corresponding to the compressor outlet pressure is equal to or less than the threshold. The compressor outlet pressure is a pressure at the outlet 34 of the compressor 26 provided in the gas turbine engine 20. As the value corresponding to the compressor outlet pressure, for example, a ratio of the compressor outlet pressure to the atmospheric pressure is used. Hereinafter, the ratio of the compressor outlet pressure to the atmospheric pressure is referred to as a pressure ratio. The threshold of the pressure ratio is referred to as a pressure ratio threshold. The pressure ratio threshold is a boundary value between the pressure ratio in the case where a breakage has occurred in the output shaft 32 and the pressure ratio in the case where a breakage has not occurred in the output shaft 32. The pressure ratio threshold can be set arbitrarily. The pressure ratio threshold is stored in advance in the storage unit 72.

It should be noted that the compressor outlet pressure itself may be used as the value corresponding to the compressor outlet pressure. However, the compressor outlet pressure varies with altitude. On the other hand, the pressure ratio is not affected by altitude. Therefore, a more accurate determination result can be obtained by using the pressure ratio as a comparison target than by using the compressor outlet pressure itself as a comparison target.

The change rate comparison unit 92 compares the change rate per unit time of the compressor outlet pressure with a change rate threshold determined in advance, and determines whether or not the change rate per unit time of the compressor outlet pressure is equal to or greater than the change rate threshold. Hereinafter, the change rate per unit time of the compressor outlet pressure is referred to as a pressure change rate. The change rate threshold is a boundary value between the pressure change rate in the case where a breakage has occurred in the output shaft 32 and the pressure change rate in the case where a breakage has not occurred in the output shaft 32. The change rate threshold can be set arbitrarily. The change rate threshold is stored in advance in the storage unit 72.

The abnormality determination unit 94 determines whether or not an abnormality has occurred in the output shaft 32 of the gas turbine engine 20 based on the comparison results (determination results) of the output comparison unit 86, the rotational speed comparison unit 88, the pressure comparison unit 90, and the change rate comparison unit 92.

### [3. Breakage Determination Process]

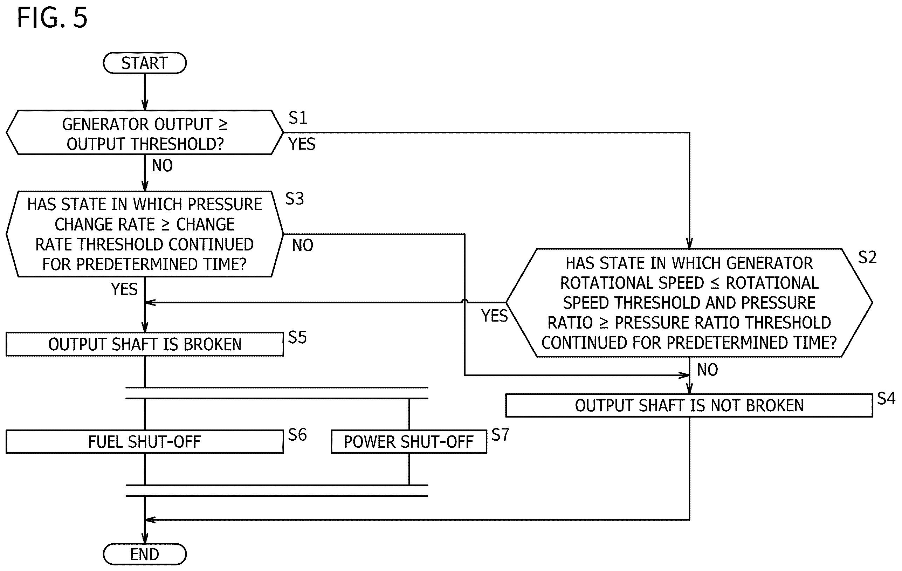

FIG. 5 is a flowchart of a breakage determination process. In the breakage determination process, it is determined whether or not a breakage has occurred in the output shaft 32. The computation unit 70 performs the breakage determination process during operation (during power generation) of the power generation unit 24. For example, the power generation unit 24 generates electric power while the moving object 100 is moving. The computation unit 70 performs the breakage determination process at predetermined time intervals while the moving object 100 is moving.

When a breakage occurs in the output shaft 32 of the gas turbine engine 20 during power generation of the generator 22, regenerative torque acts as a brake of the generator 22. Therefore, the rotational speed of the generator 22 rapidly decreases. On the other hand, since the generator 22 is separated from the gas turbine engine 20, the rotational speed of the gas turbine engine 20 increases. In order to suppress the overspeed of the gas turbine engine 20, it is preferable to detect the breakage of the output shaft 32 of the gas turbine engine 20 at an early stage.

When a breakage occurs in the output shaft 32 of the gas turbine engine 20, a difference occurs between the rotational speed of the generator 22 and the rotational speed of the gas turbine engine 20. It is conceivable to find that a breakage has occurred in the output shaft 32 of the gas turbine engine 20 based on this difference. However, if a sensor for detecting the rotational speed is provided at a first end portion (an end portion adjacent to the generator 22) of the gas turbine engine 20, the size of the power generation unit 24 increases. Further, since a second end portion of the gas turbine engine 20 (an end portion of the turbine 30) becomes high in temperature, it is not feasible to provide a sensor for detecting the rotational speed at the second end portion. That is, in the power generation unit 24, there is no place to provide a sensor for detecting the rotational speed of the gas turbine engine 20. Therefore, in the present embodiment, the compressor outlet pressure is detected instead of the rotational speed of the gas turbine engine 20.

When the power generation unit 24 is generating electric power, the gas turbine engine 20 and the generator 22 operate in high load conditions. If a breakage occurs in the output shaft 32 of the gas turbine engine 20 in the case where the gas turbine engine 20 and the generator 22 are operating in high load conditions, the compressor outlet pressure early reaches a threshold for determining the overspeed of the gas turbine engine 20. On the other hand, when the gas turbine engine 20 is in an idling condition and zero torque control of the generator 22 is performed, the power generation unit 24 does not generate electric power. When the power generation unit 24 is not generating electric power, the gas turbine engine 20 and the generator 22 operate in low load conditions. If a breakage occurs in the output shaft 32 of the gas turbine engine 20 in the case where the gas turbine engine 20 and the generator 22 are operating in low load conditions, it takes time for the compressor outlet pressure to reach the threshold for determining the overspeed of the gas turbine engine 20.

Therefore, in the breakage determination process described below, the determination condition for determining whether or not a breakage has occurred in the output shaft 32 differs depending on the load conditions of the gas turbine engine 20 and the generator 22. Specifically, in the case where the gas turbine engine 20 and the generator 22 are operating in high load conditions, the computation unit 70 determines whether or not a breakage has occurred in the output shaft 32 based on the rotational speed of the generator 22 and the pressure ratio. On the other hand, in the case where the gas turbine engine 20 and the generator 22 are operating in low load conditions, the computation unit 70 determines whether or not a breakage has occurred in the output shaft 32 based on the pressure change rate.

In the present embodiment, the pressure change rate is used in the case where the power generation unit 24 is operating in a low load condition for the following reason. The compressor outlet pressure increases in proportion to the rotational speed and the load of the gas turbine engine 20. In the case where the power generation unit 24 is operating in a low load condition, the rotational speed of the gas turbine engine 20 and the compressor outlet pressure are low, and the increase rate (change rate) of the compressor outlet pressure is small. Therefore, in the case where the power generation unit 24 is operating in a low load condition, the difference between the range of the compressor outlet pressure when a breakage has not occurred in the output shaft 32 and the range of the compressor outlet pressure when a breakage has occurred in the output shaft 32 is small. Therefore, there is a possibility that the determination as to whether or not a breakage has occurred in the output shaft 32 is made erroneously. When the output shaft 32 is broken, the gas turbine engine 20 is separated from the generator 22. When the gas turbine engine 20 is separated from the generator 22, the rotational speed of the gas turbine engine 20 increases, and the increase rate of the compressor outlet pressure shifts from a small state to a large state. Therefore, in the present embodiment, the pressure increase rate (the pressure change rate) is used to determine whether or not a breakage has occurred in the output shaft 32. As a result, an erroneous determination as to whether or not a breakage has occurred in the output shaft 32 is prevented.

In step S1, the output comparison unit 86 determines whether or not the output of the generator 22 is equal to or greater than the output threshold. The output comparison unit 86 calculates the output of the generator 22 based on the current information and the voltage information acquired by the acquisition unit 76. In the case where the gas turbine engine 20 and the generator 22 are operating in high load conditions, the output of the generator 22 is equal to or greater than the output threshold. In this case (step S1: YES), the process proceeds to step S2. On the other hand, in the case where the gas turbine engine 20 and the generator 22 are operating in low load conditions, the output of the generator 22 is less than the output threshold. In this case (step S1: NO), the process proceeds to step S3.

In the case where the process proceeds from step S1 to step S2, the rotational speed comparison unit 88 compares the rotational speed of the generator 22 with the rotational speed threshold for a predetermined time. Further, the pressure comparison unit 90 compares the pressure ratio with the pressure ratio threshold for a predetermined time. In this instance, the rotational speed comparison unit 88 calculates the rotational speed of the generator 22 based on the rotational speed information acquired by the acquisition unit 76. Further, the pressure comparison unit 90 calculates the pressure ratio based on the pressure information and the atmospheric pressure information acquired by the acquisition unit 76. In the case where a state in which the rotational speed of the generator 22 is equal to or less than the rotational speed threshold has continued for the predetermined time and a state in which the pressure ratio is equal to or greater than the pressure ratio threshold has continued for the predetermined time (step S2: YES), the process proceeds to step S5. On the other hand, in the case where the state in which the rotational speed of the generator 22 is equal to or less than the rotational speed threshold has not continued for the predetermined time and the state in which the pressure ratio is equal to or greater than the pressure ratio threshold has not continued for the predetermined time (step S2: NO), the process proceeds to step S4.

In the case where the process proceeds from step S1 to step S3, the change rate comparison unit 92 compares the pressure change rate with the change rate threshold for a predetermined time. In this instance, the change rate comparison unit 92 calculates the pressure change rate based on the pressure information of a certain period acquired by the acquisition unit 76. In the case where a state in which the pressure change rate is equal to or greater than the change rate threshold has continued for the predetermined time (step S3: YES), the process proceeds to step S5. On the other hand, in the case where the state in which the pressure change rate is equal to or greater than the change rate threshold has not continued for the predetermined time (step S3: NO), the process proceeds to step S4.

In the case where the process proceeds from step S2 or step S3 to step S4, the abnormality determination unit 94 determines that "the output shaft 32 is not broken". The abnormality determination unit 94 transmits the determination result (inspection result) to the outside of the control device 68. For example, the abnormality determination unit 94 may transmit information indicating the determination result to an integrated control device (not shown) that integrally controls the operation of the moving object 100. Alternatively, the abnormality determination unit 94 may transmit the information indicating the determination result to a display device (not shown) provided in the moving object 100. As a result, the display device can display the determination result. When step S4 is ended, the breakage determination process is ended.

In the case where the process proceeds from step S2 or step S3 to step S5, the abnormality determination unit 94 determines that "the output shaft 32 is broken". After the determination by the abnormality determination unit 94, the process proceeds to step S6 and step S7.

In step S6, the valve control unit 80 performs fuel shut-off control. As a result, a control signal is output to the shut-off valve 16. The shut-off valve 16 operates to close the fuel supply passage 18, thereby shutting off the flow of the fuel in the fuel supply passage 18.

When a breakage occurs in the output shaft 32, the gas turbine engine 20 is brought into an overspeed state. In this case, the gas turbine engine 20 may be damaged.

In order to suppress damage to the gas turbine engine 20, the valve control unit 80 performs fuel shut-off control in step S6. Consequently, the supply of the fuel to the gas turbine engine 20 is shut off, and the overspeed of the gas turbine engine 20 can therefore be suppressed. As a result, damage to the gas turbine engine 20 can be suppressed.

In step S7, the power shut-off control unit 84 performs power shut-off control. That is, the power shut-off control unit 84 performs energization control on the disconnection device 56 and the disconnection device 58. As a result, each of the disconnection device 56 and the disconnection device 58 is switched from the connected state to the power shut-off state.

When a breakage occurs in the output shaft 32, the generator 22 is stopped. Then, the supply of electric power from the generator 22 (the PCU 38) to the load device 52 is stopped. In this case, in order to compensate for the electric power shortage of the load device 52, electric power is supplied from the power storage device 54 to the load device 52. However, if the source for supplying electric power to the load device 52 is only the power storage device 54, the power storage device 54 may be brought into an overdischarged state. If the power storage device 54 is brought into the overdischarged state, a problem such as deterioration of the power storage device 54 arises.

In order to suppress deterioration of the power storage device 54, the power shut-off control unit 84 performs energization control on the disconnection device 58 in step S7. Consequently, the disconnection device 58 can be quickly switched from the connected state to the power shut-off state, and overdischarge of the power storage device 54 can therefore be suppressed. As a result, deterioration of the power storage device 54 can be suppressed.

When step S6 and step S7 are ended, the breakage determination process is ended. It should be noted that, in step S7, in the case where the disconnection device 58 shuts off the supply of electric power from the power storage device 54 to the load device 52, the power generation unit 24 provided in another power supply system 10 may supply electric power to the load device 52.

According to the breakage determination process described above, the breakage determination process can be performed with higher accuracy regardless of the load conditions of the gas turbine engine 20 and the generator 22. Further, according to the breakage determination process, it is possible to detect that a breakage has occurred in the output shaft 32 of the gas turbine engine 20 without detecting the rotational speed of the gas turbine engine 20.

Note that, in the determination of step S2, the pressure comparison unit 90 may use the pressure instead of the pressure ratio. In this case, the pressure comparison unit 90 compares the compressor outlet pressure with a pressure threshold. Further, the pressure comparison unit 90 determines whether or not a state in which the compressor outlet pressure is equal to or higher than the pressure threshold continues for a predetermined time.

### [4. Supplementary Notes]

The following supplementary notes are further disclosed in relation to the above-described embodiment.

### Supplementary Note 1

The control device (68) of the present disclosure is a control device provided in the power supply system (10) including the generator (22) driven via the output shaft (32) of the gas turbine engine (20), the control device including: the output comparison unit (86) configured to compare the generator output that is an output of the generator, with the output threshold determined in advance; the rotational speed comparison unit (88) configured to compare the rotational speed of the generator with the rotational speed threshold determined in advance; the pressure comparison unit (90) configured to compare a value corresponding to the compressor outlet pressure that is a pressure at the outlet (34) of the compressor (26) provided in the gas turbine engine, with the pressure threshold determined in advance; and the abnormality determination unit (94) configured to determine whether or not an abnormality has occurred in the output shaft, wherein the abnormality determination unit determines that the abnormality has occurred in the output shaft in the case where the output comparison unit determines that the generator output is equal to or greater than the output threshold, the rotational speed comparison unit determines that the rotational speed of the generator is less than the rotational speed threshold, and the pressure comparison unit determines that the value corresponding to the compressor outlet pressure is equal to or greater than the pressure threshold.

According to the above configuration, it is possible to detect that a breakage has occurred in the output shaft of the gas turbine engine without detecting the rotational speed of the gas turbine engine directly from the output shaft of the gas turbine engine.

### Supplementary Note 2

The control device according to Supplementary Note 1 may further include the change rate comparison unit (92) configured to compare the change rate per unit time of the compressor outlet pressure with the change rate threshold determined in advance, wherein the abnormality determination unit may determine that the abnormality has occurred in the output shaft in the case where the output comparison unit determines that the generator output is less than the output threshold and the change rate comparison unit determines that the change rate per unit time of the compressor outlet pressure is equal to or greater than the change rate threshold.

According to the above configuration, even in the case where the gas turbine engine and the generator are operating in low load conditions, it is possible to detect that a breakage has occurred in the output shaft of the gas turbine engine.

### Supplementary Note 3

The control device according to Supplementary Note 1 may further include the fuel shut-off control unit (80) configured to, in the case where the abnormality determination unit determines that the abnormality has occurred in the output shaft, perform control to shut off fuel supplied to the gas turbine engine.

According to the above configuration, damage to the gas turbine engine can be suppressed.

### Supplementary Note 4

The control device according to Supplementary Note 1 may further include the power shut-off control unit (84) configured to, in the case where the abnormality determination unit determines that the abnormality has occurred in the output shaft, perform control to shut off electric power that is output to the load device (52) from the power storage device (54) configured to supply electric power to the load device together with the generator.

According to the above configuration, deterioration of the power storage device can be suppressed.

### Supplementary Note 5

In the control device according to Supplementary Note 1, the abnormality occurring in the output shaft may be a breakage of the output shaft.

### Supplementary Note 6

The moving object (100) of the present disclosure includes the power supply system including the control device according to any one of Supplementary Notes 1 to 5.

### Supplementary Note 7

The control method of the present disclosure is a control method for the power supply system including the generator driven via the output shaft of the gas turbine engine, the control method including: the output comparison step (step S1) of comparing the generator output that is an output of the generator, with the output threshold determined in advance; the rotational speed comparison step (step S2) of comparing the rotational speed of the generator with the rotational speed threshold determined in advance; the pressure comparison step (step S2) of comparing a value corresponding to the compressor outlet pressure that is a pressure at the outlet of the compressor provided in the gas turbine engine, with the pressure threshold determined in advance; and the abnormality determination step (step S5) of determining whether or not an abnormality has occurred in the output shaft, wherein, in the abnormality determination step, it is determined that the abnormality has occurred in the output shaft in the case where it is determined that the generator output is equal to or greater than the output threshold in the output comparison step, it is determined that the rotational speed of the generator is less than the rotational speed threshold in the rotational speed comparison step, and it is determined that the value corresponding to the compressor outlet pressure is equal to or greater than the pressure threshold in the pressure comparison step.

### Supplementary Note 8

The program of the present disclosure causes a computer to execute the control method according to Supplementary Note 7.

## Claims

1. A control device (68) provided in a power supply system (10) that includes a generator (22) driven via an output shaft (32) of a gas turbine engine (20), the control device comprising:
an output comparison unit (86) configured to compare a generator output that is an output of the generator, with an output threshold determined in advance;
a rotational speed comparison unit (88) configured to compare a rotational speed of the generator with a rotational speed threshold determined in advance;
a pressure comparison unit (90) configured to compare a value corresponding to a compressor outlet pressure that is a pressure at an outlet (34) of a compressor (26) provided in the gas turbine engine, with a pressure threshold determined in advance; and
an abnormality determination unit (94) configured to determine whether or not an abnormality has occurred in the output shaft,
wherein the abnormality determination unit determines that the abnormality has occurred in the output shaft in a case where the output comparison unit determines that the generator output is equal to or greater than the output threshold, the rotational speed comparison unit determines that the rotational speed of the generator is less than the rotational speed threshold, and the pressure comparison unit determines that the value corresponding to the compressor outlet pressure is equal to or greater than the pressure threshold.

2. The control device according to claim 1, further comprising a change rate comparison unit (92) configured to compare a change rate per unit time of the compressor outlet pressure with a change rate threshold determined in advance, wherein
the abnormality determination unit determines that the abnormality has occurred in the output shaft in a case where the output comparison unit determines that the generator output is less than the output threshold and the change rate comparison unit determines that the change rate per unit time of the compressor outlet pressure is equal to or greater than the change rate threshold.

3. The control device according to claim 1, further comprising a fuel shut-off control unit (80) configured to, in a case where the abnormality determination unit determines that the abnormality has occurred in the output shaft, perform control to shut off fuel supplied to the gas turbine engine.

4. The control device according to claim 1, further comprising a power shut-off control unit (84) configured to, in a case where the abnormality determination unit determines that the abnormality has occurred in the output shaft, perform control to shut off electric power that is output to a load device (52) from a power storage device (54) configured to supply electric power to the load device together with the generator.

5. The control device according to claim 1, wherein
the abnormality occurring in the output shaft is a breakage of the output shaft.

6. A moving object (100) comprising a power supply system including the control device according to any one of claims 1 to 5.

7. A control method for a power supply system including a generator driven via an output shaft of a gas turbine engine, the control method comprising:
an output comparison step of comparing a generator output that is an output of the generator, with an output threshold determined in advance;
a rotational speed comparison step of comparing a rotational speed of the generator with a rotational speed threshold determined in advance;
a pressure comparison step of comparing a value corresponding to a compressor outlet pressure that is a pressure at an outlet of a compressor provided in the gas turbine engine, with a pressure threshold determined in advance; and
an abnormality determination step of determining whether or not an abnormality has occurred in the output shaft,
wherein, in the abnormality determination step, it is determined that the abnormality has occurred in the output shaft in a case where it is determined that the generator output is equal to or greater than the output threshold in the output comparison step, it is determined that the rotational speed of the generator is less than the rotational speed threshold in the rotational speed comparison step, and it is determined that the value corresponding to the compressor outlet pressure is equal to or greater than the pressure threshold in the pressure comparison step.

8. A program for causing a computer to execute the control method according to claim 7.

9. A non-transitory storage medium configured to store a program for causing a computer to execute the control method according to claim 7.
